# EUROPEAN PATENT APPLICATION

(11) **EP 1 887 378 A1**
(43) Date of publication of application: **13.02.2008**
(21) Application number: 07015105.5
(22) Date of filing: 01.08.2007
(51) Int. Cl.: G01S 1/00

(54) **Timepiece and time correction method for a timepiece**

(30) Priority: 04.08.2006 JP 2006213482
(71) Applicant: Seiko Epson Corporation, Shinjuku-ku Tokyo 163-0811 (JP)
(72) Inventor: Matsuzaki, Jun, c/o Seiko Epson Corporation, Suwa-shi, Nagano-ken 392-8502 (JP); Honda, Katsuyuki, c/o Seiko Epson Corporation, Suwa-shi, Nagano-ken 392-8502 (JP); Fujisawa, Teruhiko, c/o Seiko Epson Corporation, Suwa-shi, Nagano-ken 392-8502 (JP); Urano, Osamu, c/o Seiko Epson Corporation, Suwa-shi, Nagano-ken 392-8502 (JP)
(74) Representative: Hoffmann, Klaus

(57) **Abstract**

A timekeeping device having a reception unit that captures positioning information satellites orbiting the Earth and receives satellite signals from the captured positioning information satellites; a time correction information generating unit that generates time correction information based on the satellite signals received by the reception unit; a display information correction unit that corrects displayed time information based on the time correction information; a capturable satellite information storage unit that stores capturable satellite information relating to the positioning information satellites that can be captured in the region where the reception unit is located; and a region information input unit for inputting the region information for the location of the reception unit. The reception unit captures the positioning information satellites based on the region information input through the region information input unit and the capturable satellite information.

## Description

### BACKGROUND

### 1. Field of Invention

The present invention relates to a timepiece that sets the time based on a signal received from a GPS satellite, for example, and to a time correction method for the timepiece.

### 2. Description of Related Art

The Global Position System (GPS), which is a system enabling a receiving device to determine its own position, uses satellites (GPS satellites) that each orbit the Earth on a specific path. Each GPS satellite has an on-board atomic clock and keeps time with extremely high precision.

Japanese Patent No. 3512068 (paragraph [0001]), for example, teaches a method of using data from the atomic clock of a GPS satellite to correct the time kept by a timepiece with high precision.

However, in order to get atomic clock data from a GPS satellite, the GPS receiver must first capture a GPS satellite signal and synchronize with the GPS satellite signal.

The GPS satellites are also constantly moving and in order to capture a GPS satellite signal the GPS satellite position must be predicted from GPS satellite orbit data.

A minimum of four GPS satellites must also be captured in order to determine the precise time from the GPS satellite signals.

Capturing signals from four moving GPS satellites is normally time-consuming and results in high power consumption. This is a significant burden for a timepiece or other device that requires very little power, and incorporating a GPS receiver into such devices is therefore difficult.

The interval for capturing a GPS satellite signal and acquiring the time data is therefore typically once or twice a day in order to prevent excessive power consumption.

### SUMMARY

The time at which a signal from a particular GPS satellite can be received from Earth varies because the GPS satellites are constantly moving on fixed orbits around the Earth. A timepiece or other device with a time correction mechanism therefore predicts the GPS satellites that can be captured based on orbital information about all of the satellites in the GPS constellation (the almanac data), and receives signals from those satellites to get the time information.

However, if the user of the timepiece or other device having this GPS receiver mechanism moves to a different time zone, such as when travelling abroad, the GPS satellites predicted to fly overhead also change. The timepiece or GPS receiver does not know the time zone of its current location, however, and must therefore search for and capture the GPS satellites assuming that the current location is anywhere in the world. This significantly increases power consumption.

A timepiece and a time correction method for a timepiece according to the present invention can quickly capture positioning information satellites such as a GPS satellite and correct the time even if the current location changes greatly.

A timekeeping device having a reception unit that captures positioning information satellites orbiting the Earth and receives satellite signals from the captured positioning information satellites; a time correction information generating unit that generates time correction information based on the satellite signals received by the reception unit; a display information correction unit that corrects displayed time information based on the time correction information; a capturable satellite information storage unit that stores capturable satellite information relating to the positioning information satellites that can be captured in the region where the reception unit is located; and a region information input unit for inputting the region information for the location of the reception unit. The reception unit captures the positioning information satellites based on the region information input through the region information input unit and the capturable satellite information.

This aspect of the invention has a capturable satellite information storage unit that stores capturable satellite information relating to the positioning information satellites that can be captured in the region where the reception unit is located, and a region information input unit for inputting the region information for the location of the reception unit, and is arranged so that the reception unit captures the positioning information satellites based on the region information input through the region information input unit and the capturable satellite information.

As a result, if, for example, the user of the timekeeping device travels by airplane from Japan to a country in a different time zone and the user then inputs the region of the destination country using the region information input unit, the timekeeping device can acquire the satellite information for the positioning information satellites, such as GPS satellites, appropriate to the input region.

The GPS satellites or other positioning information satellites can therefore be quickly located and captured, and the problem of high power consumption resulting from capturing the positioning information satellites taking a long time is avoided. Highly precise time information can therefore be kept without high power consumption even if the location of the timekeeping device changes greatly.

Preferably, the region information input unit is rendered in the time display unit of the timekeeping device and enables selecting region names.

Because the region information input unit is rendered in the time display unit of the timekeeping device and enables selecting region names, the timekeeping device user can simply select the region name of the destination, and the timekeeping device can then easily find the appropriate positioning information satellites and get the time correction information.

Further preferably, the capturable satellite information relating to the positioning information satellites is stored correlated to time difference information for each region; and the region information input unit is linked to operating a hand in the time display unit of the timekeeping device.

In this aspect of the invention the capturable satellite information relating to the positioning information satellites is stored correlated to time difference information for each region; and the region information input unit is linked to operating a hand in the time display unit of the timekeeping device. This arrangement enables the timekeeping device to easily find the appropriate positioning information satellites and get the time correction information as a result of the user of the timekeeping device simply adjusting the hand pointing to the time in the time display unit according to the time difference in the destination region.

Further preferably, the timekeeping device also has an altitude information acquisition unit; a probability of travel information storage unit that stores probability of travel information based on the altitude information; and a travel determination unit that determines if the probability of travel is high based on the altitude information acquired by the altitude information acquisition unit and the probability of travel information. The positioning information satellites are captured based on the capturable satellite information and the region information input by the region information input unit when the travel determination unit determines the probability of travel is high.

The timekeeping device according to this aspect of the invention captures the positioning information satellites based on the capturable satellite information and the region information input by the region information input unit when the travel determination unit determines the probability of travel is high.

If the user of the timekeeping device accidentally operates the region information input unit but has not actually travelled to a different time zone, the timekeeping device will not attempt to capture the positioning information satellites based on the capturable satellite information for the region input as the destination, and accidental operation is thus prevented.

Another aspect of the invention is a time correction method for a timekeeping device, the time correction method having steps of: a reception unit that receives satellite signals from positioning information satellites orbiting the Earth capturing the positioning information satellites; a time correction information generating unit generating time correction information based on the satellite signals received by the reception unit; a display information correction unit correcting displayed time information based on the time correction information. The reception unit captures the positioning information satellites based on region information that is input through a region information input unit for inputting the region information for the location of the reception unit and capturable satellite information relating to the positioning information satellites that can be captured in the region where the reception unit is located.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a schematic diagram of an electronic timepiece described as a first embodiment of a timekeeping device according to the present invention.

FIG. 2A is an enlarged view of the time difference setting display unit shown in FIG. 1, and FIG. 2B describes operating the time difference setting display unit shown in FIG. 2A.

FIG. 3 is a block diagram of the hardware configuration of the electronic timepiece.

FIG. 4 is a block diagram of the software arrangement of the electronic timepiece shown in FIG. 1.

FIG. 5 is a flow chart of the electronic timepiece initialization mode.

FIG. 6 is a flow chart of the time difference correction mode of the electronic timepiece.

FIG. 7 describes the content of the nationally (regionally) capturable GPS satellite data.

FIG. 8 further describes the content of the nationally (regionally) capturable GPS satellite data.

FIG. 9 describes an electronic timepiece according to a second embodiment of the invention.

### DESCRIPTION OF THE PREFERRED EMBODIMENTS

Preferred embodiments of the present invention are described below with reference to the accompanying figures.

The embodiments described below are specific desirable examples of the invention and technically desirable limitations are also noted, but the scope of the invention is not limited to these embodiments except as may be specifically described below.

* Embodiment 1

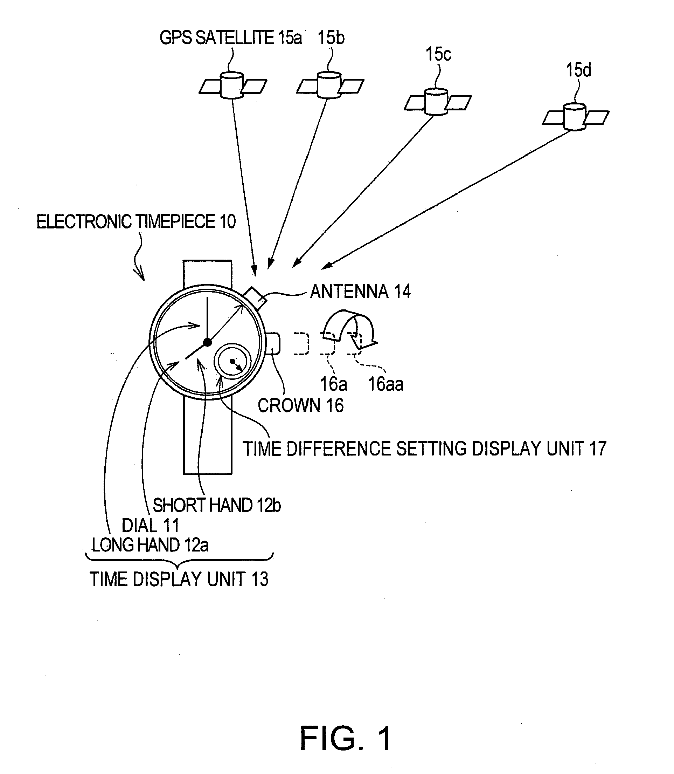

FIG. 1 is a schematic diagram of an electronic timepiece 10 as a first embodiment of a timepiece according to the present invention. As shown in FIG. 1 a time display unit 13 having a dial 11 and hands such as a long hand 12a and a short hand 12b for displaying the time is rendered on the front of the electronic timepiece 10. The electronic timepiece 10 also has a crown 16 for adjusting the hands and operating the timepiece.

An antenna 14 for receiving satellite signals from the GPS satellites 15a to 15d is rendered on the side of the electronic timepiece 10 as shown in FIG. 1.

These GPS satellites 15a are examples of positioning information satellites orbiting the Earth.

More specifically, the electronic timepiece 10 according to this embodiment of the invention determines its own position by receiving signals from GPS satellites 15a, and uses data from the atomic clocks of the GPS satellites 15a to acquire precise time information as described below.

The method of correcting the time using GPS satellites 15a signals is described next.

The GPS satellites 15a orbit the Earth on specific known orbits. Each of the GPS satellites 15a transmits a signal, and these signals can be received by a GPS receiver. These signals travel at the speed of light. The distance from a particular GPS satellite 15a to the GPS receiver, referred to below as the pseudo-satellite-distance, can therefore be determined if the transmission delay time is known. The transmission delay time is the time from when the GPS satellite signal is transmitted from the GPS satellite 15a until the signal is received by the receiver.

If three GPS satellites 15a are captured and the pseudo-satellite-distance to each of the satellites is known, the position of the receiver in three-dimensional (X, Y, Z) space can be calculated from three simultaneous equations.

However, because the internal clock of the GPS receiver is imprecise, four GPS satellites 15a are captured, a time (T) is added as a fourth unknown to the GPS receiver position (X, Y, Z), and the time (T) is determined using four simultaneous equations. This time (T) is based on data from the atomic clocks on-board the GPS satellites 15a, and is therefore a highly precise time (T) value.

This embodiment of the invention acquires this precise time value to correct the time kept by the electronic timepiece 10 shown in FIG. 1.

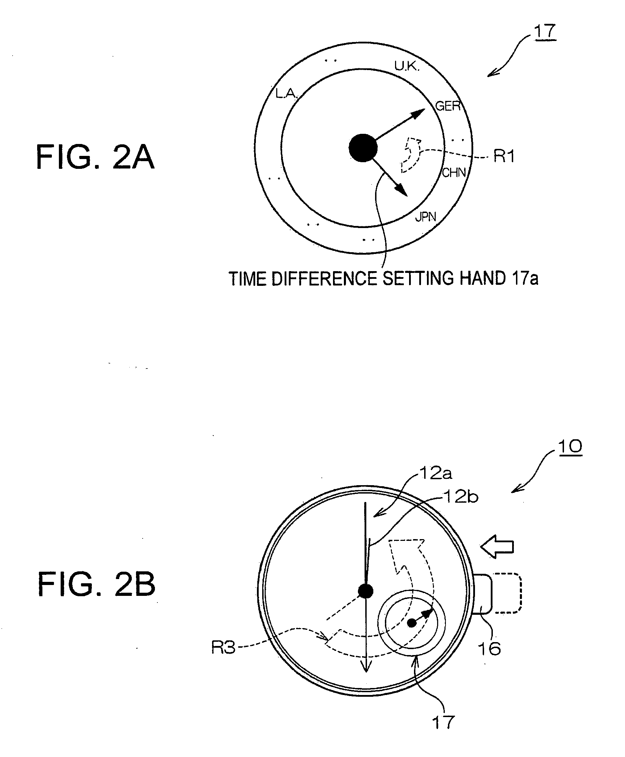

As shown in FIG. 1, the electronic timepiece 10 also has a time difference setting display unit 17 on the dial 11, that is, the time display unit 13. FIG. 2A is an enlarged plan view of the time difference setting display unit 17 in FIG. 1, and FIG. 2B schematically describes operation of the time difference setting display unit 17 shown in FIG. 2A.

As shown in FIG. 2A the time difference setting hand 17a can be set to, for example, Japan (JPN), China (CHN), Germany (GER), and other time zones.

As described above, this embodiment of the invention receives satellite signals from the GPS satellites 15a to acquire precise time data, but as also described above capturing the GPS satellites 15a is absolutely essential to getting the time data. Capturing the GPS satellites 15a can be difficult, however, because the satellites are travelling on orbits in space. More particularly, if the electronic timepiece 10 does not know its own location, the electronic timepiece 10 must search all of the GPS satellites 15a, the search takes a long time, and power consumption by the electronic timepiece 10 is great. This embodiment of the invention therefore has a function for informing the electronic timepiece 10 of the location of the electronic timepiece 10 as a result of operating the time difference setting hand 17a.

This is described in further detail below.

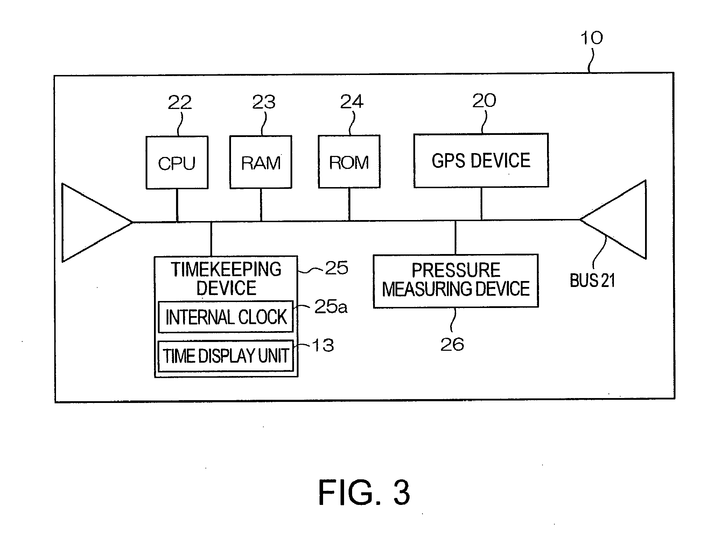

FIG. 3 is a block diagram showing the main hardware configuration of the electronic timepiece 10. As shown in FIG. 3 the electronic timepiece 10 has a bus 21 to which are connected a CPU (central processing unit) 22, RAM (random access memory) 23, and a ROM (read-only memory) device 24. A GPS device 20 is also connected to the bus 21. This GPS device 20 is comparable to the GPS receiver described above.

More specifically, the GPS device 20 has the antenna 14 shown in FIG. 1, and filter (SAW), RF, and baseband units not shown. The GPS device 20 passes signals received from the GPS satellites 15a in FIG. 1 through the filter and RF units and outputs a baseband signal.

The GPS device 20 is thus an example of a reception unit that captures signals from the positioning information satellites (GPS satellites 15a) orbiting the Earth and receives the satellite signals from the captured positioning information satellites (GPS satellites 15a).

A timekeeping device 25 is also connected to the bus 21. The timekeeping device 25 is the clock mechanism of the electronic timepiece 10. The timekeeping device 25 manages the internal clock 25a and manages the time display unit 13 shown in FIG. 1.

More specifically, the timekeeping device 25 controls operating the display (the long hand 12a and short hand 12b) of the time display unit 13 based on time data from the internal clock 25a.

A pressure measuring device 26 is also connected to the bus 21. This pressure measuring device 26 is a semiconductor pressure sensor in this embodiment of the invention.

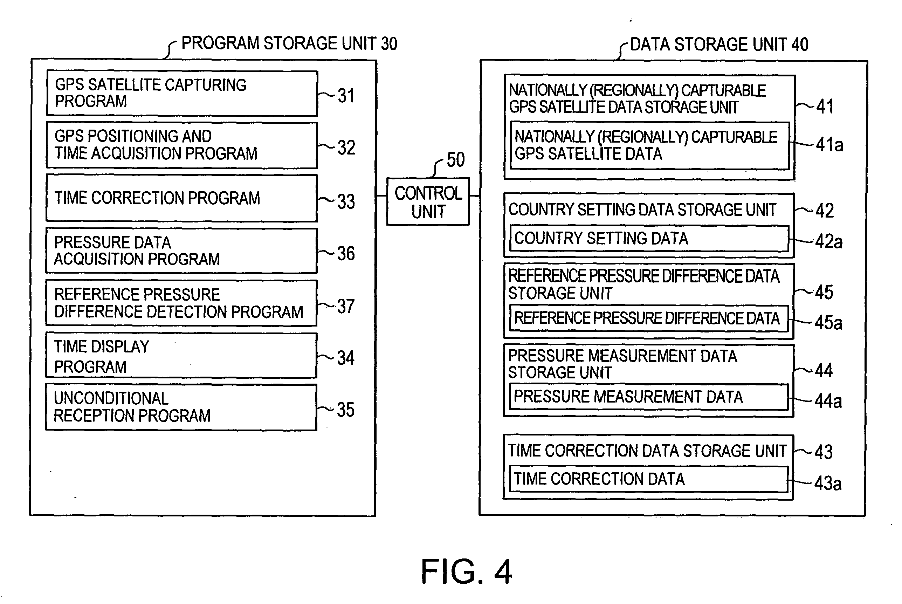

FIG. 4 is a block diagram of the main software arrangement of the electronic timepiece 10 shown in FIG. 1. As shown in FIG. 4, the electronic timepiece 10 has a program storage unit 30 and a data storage unit 40 connected through a control unit 50. The program storage unit 30 and the data storage unit 40 do not actually store data as shown in the figure, and are shown this way only for descriptive convenience.

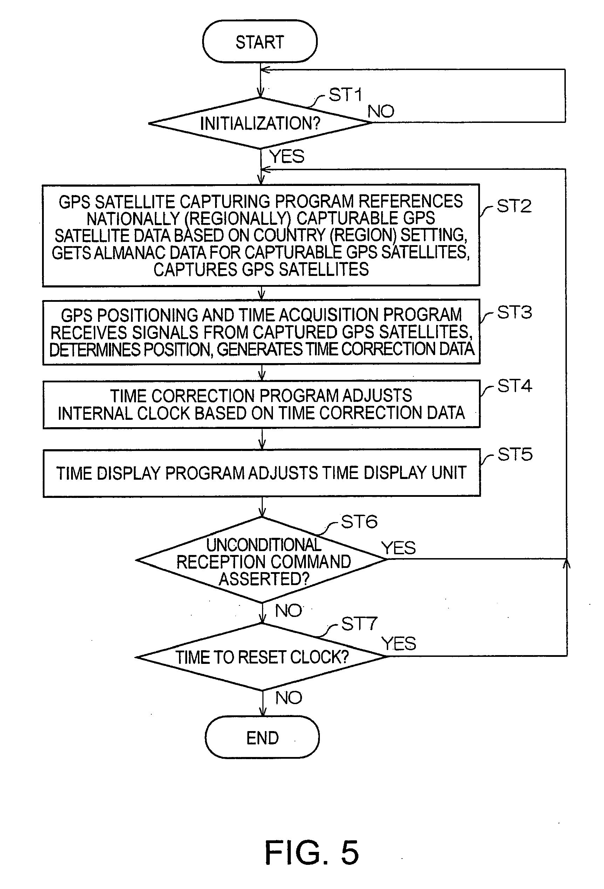

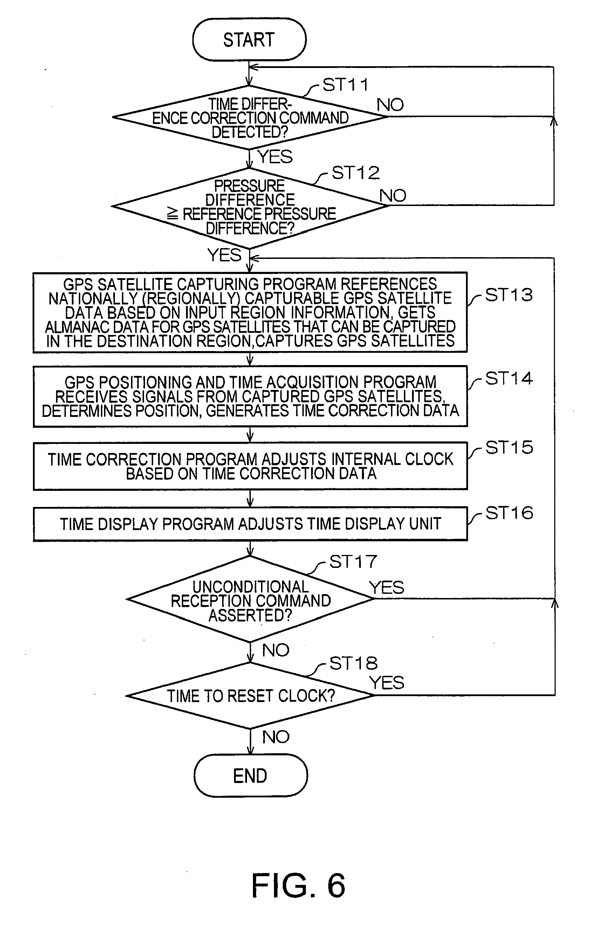

FIG. 5 is a flow chart of the initialization mode of the electronic timepiece 10. FIG. 6 is a flow chart of the time difference correction mode.

The arrangement of the invention shown in FIG. 4 is described below while describing the operation of the electronic timepiece 10 with reference to the flow charts in FIG. 5 and FIG. 6.

The initialization mode shown in FIG. 5 is described next. The initialization mode is used when the electronic timepiece 10 user does not travel to a different time zone, such as from Japan to Germany.

If the electronic timepiece 10 detects the initialization mode in step ST1, control goes to step ST2.

In step ST2 the GPS device 20 shown in FIG. 3 tries to capture a GPS satellite 15a signal in order to receive a satellite signal from the GPS satellites 15a in FIG. 1.

The GPS satellites 15a can be difficult to capture because they are travelling around the Earth on orbits in space as described above.

This embodiment of the invention therefore stores nationally (regionally) capturable GPS satellite data 41a in a nationally (regionally) capturable GPS satellite data storage unit 41.

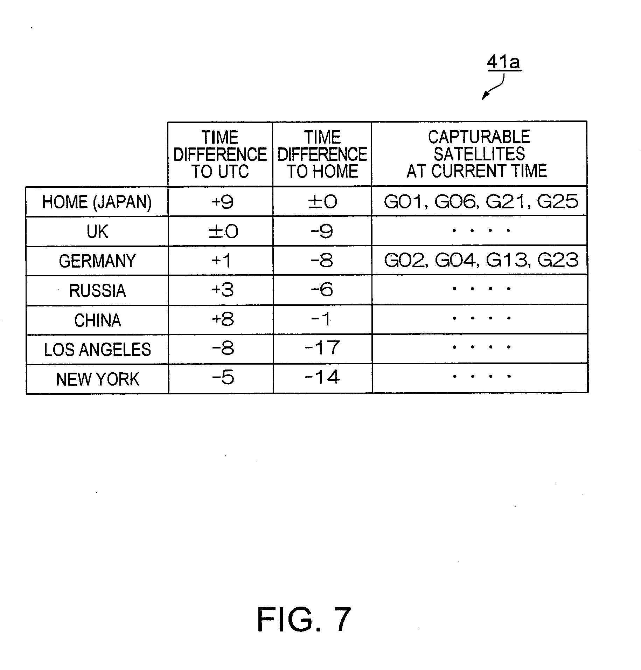

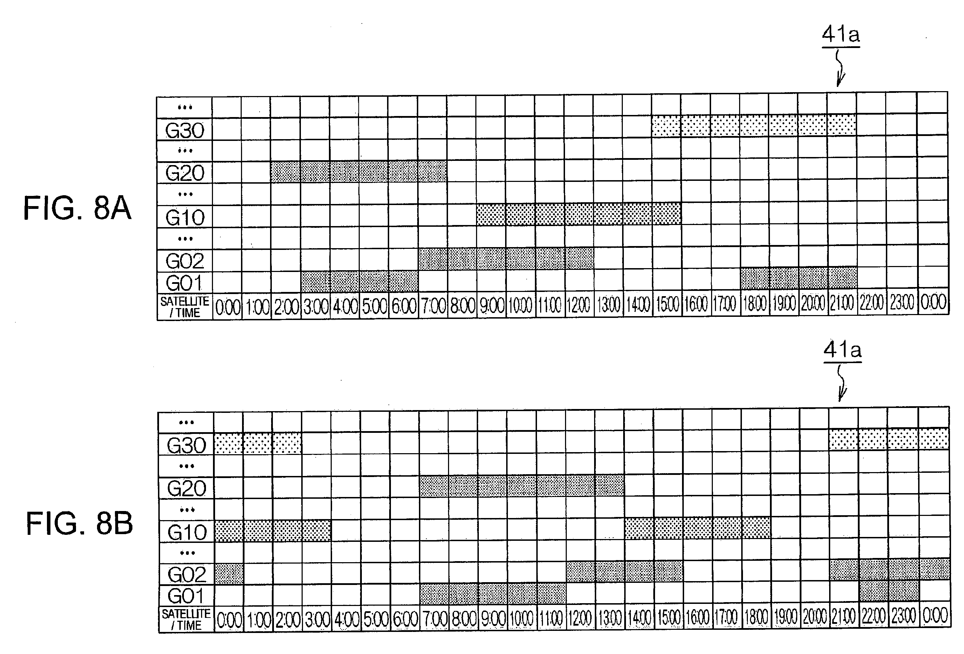

This nationally (regionally) capturable GPS satellite data 41a is data such as shown in FIG. 7 and FIG. 8. FIG. 7 and FIG. 8 are schematic diagrams showing the content of the nationally (regionally) capturable GPS satellite data 41a. More specifically, as shown in FIG. 7, the electronic timepiece 10 stores the home country or region of the electronic timepiece 10 (such as England, Germany, Russia, China, Los Angeles, or New York) and the time difference of that time zone (the time difference from UTC (Universal Coordinated Time) or a specific time zone (such as Japan in this example)).

The nationally (regionally) capturable GPS satellite data 41a also contains the identification numbers (such as G01, G06, and so forth) of the GPS satellites 15a that can be captured when the electronic timepiece 10 is located in each country or region.

The identification numbers of the GPS satellites 15a that can be captured in each country or region vary according to the time of day, and the actual data is therefore as shown in FIG. 8.

More specifically, FIG. 8A shows the identification numbers of the GPS satellites 15a that can be captured in Japan and the times when those satellites can be captured.

FIG. 8B shows the identification numbers of the GPS satellites 15a that can be captured in Germany and the times when those satellites can be captured.

Because the GPS satellites 15a that can be captured thus depend on both the country or region and the current time, this variable information is stored in the nationally (regionally) capturable GPS satellite data 41a shown in FIG. 4.

Step ST2 also uses the country setting data 42a stored in the country setting data storage unit 42. This country setting data 42a defines the country or region where the electronic timepiece 10 is located, such as in Japan in this example.

Based on the country setting data 42a, such as Japan in this example, the GPS satellite capturing program 31 therefore references the nationally (regionally) capturable GPS satellite data 41a describing the GPS satellites 15a that can be captured in that country (Japan), and gets the almanac data for the GPS satellites 15a that can be captured in step ST2.

More specifically, the GPS satellite capturing program 31 references the data in FIG. 8A to learn that GPS satellites 15a with the identification numbers G02 and G20, for example, can be captured if the current time is 7:00, and gets the almanac data (orbital information) for those satellites.

Based on the almanac data, the GPS device 20 in FIG. 3 then operates to capture signals from GPS satellites 15a G02 and G20, for example. (See FIG. 4.)

This embodiment of the invention can thus know the location of the electronic timepiece 10 from the country setting data 42a and stores data identifying the GPS satellites 15a that can be captured in that location, and can therefore capture the GPS satellites 15a in a short time so that power consumption is not great.

The nationally (regionally) capturable GPS satellite data 41a is thus an example of capturable satellite information describing the positioning information satellites (GPS satellites 15a) that can be captured in the region where the reception unit (electronic timepiece 10) is located. Step ST2 is an example of the satellite capturing process.

Control then goes to step ST3. In step ST3 the GPS positioning and time acquisition program 32 in FIG. 4 receives signals from the GPS satellites 15a captured in step ST2 (G01, G20, and so forth in this example) through the GPS device 20, detects the position and generates the time correction data 43a in FIG. 4.

More specifically, signals are received from four GPS satellites 15a as described above, the position of the electronic timepiece 10 is determined and precise time correction data 43a is generated by solving four simultaneous equations, and the time correction data 43a is stored to the time correction data storage unit 43 in FIG. 4.

Highly precise time data supplied by the atomic clocks of the GPS satellites 15a can thus be acquired.

The time correction data 43a is an example of time correction information, and the GPS positioning and time acquisition program 32 is an example of a time correction information generating unit that generates the time correction information (time correction data 43a) based on satellite signals received by the reception unit (GPS device 20). Step ST3 is an example of a time correction information generating process.

Next, as shown in step ST4 and step ST5, the time correction program 33 corrects the internal clock 25a in FIG. 3 based on the time correction data 43a. The time display correction program 34 then adjusts the long hand 12a and the short hand 12b of the time display unit 13 in FIG. 1 as needed.

The time presented on the time display unit 13 in FIG. 1 is thus extremely precise.

The time correction program 33 and the time display program 34 are thus an example of a display information correction unit that adjusts the displayed time information (time display unit 13) based on the time correction information (time correction data 43a).

Next, in step ST6, whether an unconditional (manual) reception command was asserted is then determined. More specifically, if the user of the electronic timepiece 10 shown in FIG. 1 feels it is necessary to adjust the time shown by the time display unit 13 and operates the crown 16 in FIG. 1 accordingly, the electronic timepiece 10 can be forced to unconditionally execute steps ST2 to ST5.

More specifically, the unconditional reception program 35 in FIG. 4 operates and causes the electronic timepiece 10 to execute steps ST2 to ST5.

Step ST7 then decides if it is time to correct the time. More specifically, this operation causes the electronic timepiece 10 to correct the time in the normal operating mode that is neither the initialization mode nor the unconditional reception mode.

For example, an electronic timepiece 10 located in Japan may be set to adjust the time at 20: 00. In this case step ST7 determines if the current time is 20:00, and executes steps ST2 to ST5 to correct the time display unit 13 of the electronic timepiece 10 if it is 20: 00.

This completes the initialization mode.

The time difference correction mode is described next. The time difference correction mode is used when the electronic timepiece 10 user travels from one time zone, such as Japan, to a country in another time zone, such as Germany.

In this case the electronic timepiece 10 moves a long distance around the Earth; and the GPS satellites 15a that can be captured in the destination country, Germany, are different from the GPS satellites 15a that can be captured in Japan. See FIG. 8 described above.

If the electronic timepiece 10 then tries to capture the GPS satellites 15a based on the nationally (regionally) capturable GPS satellite data 41a in FIG. 8 for the country setting 42a of Japan even though the electronic timepiece 10 has travelled to Germany, it will be extremely difficult to capture the GPS satellites 15a, a long time will be spent capturing the satellites, and power consumption will be significant.

The electronic timepiece 10 therefore executes this time difference correction mode so that the GPS satellites 15a can be captured quickly.

Step ST11 in FIG. 6 first decides whether a time difference correction command was asserted. This is described more specifically with reference to FIG. 2. If the electronic timepiece 10 user travels from Japan to Germany as in this example, the electronic timepiece 10 user pulls the crown 16 out two stops as shown in FIG. 1 to adjust the time difference setting display unit 17.

The time difference setting hand 17a pointing initially to JPN (Japan) in FIG. 2A is then moved in the direction of arrow R1 and set to GER (Germany).

When the crown 16 is then pushed back in as shown in FIG. 2B, the time displayed by the time display unit 13 changes to the time in Germany as indicated by arrow R3. More specifically, the short hand 12b moves from the 8 denoting the time in Japan to the 12 denoting the time in Germany.

If step ST11 determines that a time difference correction command was asserted, control goes to step ST12.

In this case the time is adjusted to the time in Germany based on the nationally (regionally) capturable GPS satellite data 41a in FIG. 7.

This embodiment of the invention enables moving the time difference setting hand 17a when the crown 16 is pulled out to the second stop, but the invention is not so limited. The time difference setting hand 17a could be operated by pulling the crown 16 from the 0 stop to stop 1, stop 2, stop 1, stop 2, stop 3, or operating the crown 16 could be limited to a within a specified time, or the crown 16 could be operated while also pressing another button.

Step ST12 decides if the pressure difference is greater than or equal to a specified pressure difference. This is to prevent the electronic timepiece 10 user from accidentally operating the crown 16.

More specifically, the electronic timepiece 10 has a pressure measuring device 26 as shown in FIG. 3, and this pressure measuring device 26 has a semiconductor pressure sensor. The pressure detected by this semiconductor pressure sensor is stored by the pressure data acquisition program 36 as the pressure measurement data 44a shown in FIG. 4 to the pressure measurement data storage unit 44.

The reference pressure difference detection program 37 reads reference pressure difference data 45a to determine if the pressure difference is greater than or equal to a reference pressure difference.

The reference pressure difference data 45a is used to determine if the pressure difference is greater than or equal to a reference pressure difference equal to an altitude change of 2000 m, for example.

That is, if the pressure difference indicates a an altitude change of 2000 m or more, or more particularly if there is an altitude change of 2000 m or more in a period of approximately 30 minutes to 1 hour, the electronic timepiece 10 is determined to be on an airplane.

A time difference change is detected and control goes to step ST13 only if step ST12 detects travel by airplane.

This embodiment of the invention determines whether there is a change in the time difference based on whether or not travel by airplane is detected, but the invention is not so limited and this step could be omitted depending on how the user has configured the electronic timepiece 10.

In this case detecting a change in the time difference is based on the user setting. This enables detecting a time difference change when the electronic timepiece 10 user travels by land or by sea, for example.

The pressure data acquisition program 36 is thus an example of an altitude information acquisition unit that gets altitude information. The reference pressure difference data 45a is an example of probability of travel information based on altitude information. The reference pressure difference detection program 37 is an example of a travel determination unit that decides if the probability of travel information is high based on the altitude information (pressure measurement data 44a) acquired by the altitude information acquisition unit (pressure data acquisition program 36), and the probability of travel information (reference pressure difference data 45a).

In step ST13 the GPS satellite capturing program 31 references the nationally (regionally) capturable GPS satellite data 41a based on the country setting data 42a (the destination country to which the user travelled, such as Germany in this example). The electronic timepiece 10 can therefore quickly capture the appropriate GPS satellites 15a and keep power consumption low even after moving from Japan to Germany because the electronic timepiece 10 also has the almanac data for the GPS satellites 15a that can be received at the current time in Germany.

The time difference setting display unit 17 is thus an example of a region information input unit for inputting region information for the location of the reception unit (GPS device 20).

Step ST13 is an example of an arrangement whereby the reception unit (GPS device 20) captures positioning information satellites (GPS satellites 15a) based on region information and capturable satellite information (nationally (regionally) capturable GPS satellite data 41a) input by the region information input unit (time difference setting display unit 17).

Steps ST12 and ST13 are an example of an arrangement for capturing the positioning information satellites (GPS satellites 15a) based on the capturable satellite information (nationally (regionally) capturable GPS satellite data 41a) and the region information input by the region information input unit (time difference setting display unit 17) when the travel determination unit (reference pressure difference detection program 37) determines that the probability of travel is high.

Furthermore, because the selectable countries and regions are displayed on the time difference setting display unit 17 using the regional names, the electronic timepiece 10 user can also easily set the current region without mistake by selecting the name of the region on the time difference setting display unit 17.

The time difference setting display unit 17 is thus an arrangement that is rendered on the time display unit 13 of the timekeeping device (electronic timepiece 10) to enable selecting the region name (such as Germany or Japan).

Control then goes to steps ST14 to ST18, but these steps are the same as steps ST3 to ST7 described above and further description is therefore omitted here.

As described above, after the electronic timepiece 10 user has travelled a great distance, this embodiment of the invention enables the electronic timepiece 10 to quickly acquire information about the GPS satellites 15a that can be captured at the destination, quickly capture the available GPS satellites 15a and determine its own current position, and precisely correct the time.

* Embodiment 2

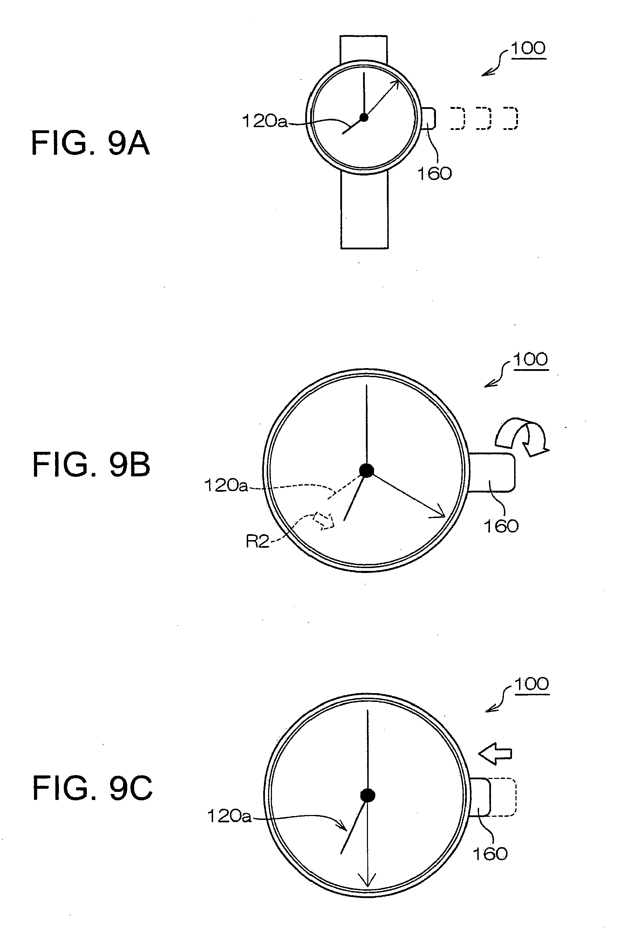

FIG. 9 is a schematic diagram of an electronic timepiece 100 according to a second embodiment of the invention. The electronic timepiece 100 according to this embodiment of the invention is substantially the same as the electronic timepiece 10 of the first embodiment, and is described below with reference to the differences.

This embodiment does not have the time difference setting display unit 17 shown in FIG. 2. To set the time difference in this embodiment, therefore, the user pulls the crown 160 out three stops as shown in FIG. 9A and then turns the crown 160 to move the short hand 120a.

If the electronic timepiece 100 user travels from Japan to China, for example, the short hand 120a is moved in the direction of arrow R2 to set the time back one hour as shown in FIG. 9B. This adds 8 hours to the UTC in the nationally (regionally) capturable GPS satellite data 41a shown in FIG. 7, and sets the time difference to the time difference in China.

When the crown 160 is then pushed in again as shown in FIG. 9C, the country setting data 42a in FIG. 4 is changed to "China" in this example so that the GPS satellites 15a can be captured based on the information about the GPS satellites 15a that can be captured in China.

Note that while China is used by way of example in this embodiment, the electronic timepiece 100 also recognizes the time difference change for other countries or regions based on movement of the short hand 120a.

The short hand 120a of the electronic timepiece 100 in this second embodiment of the invention is an example of the region information input unit. The region information input unit is obviously not limited to the short hand 120a, and could be a different hand.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention.

## Claims

1. A timekeeping device comprising:
a reception unit that captures positioning information satellites orbiting the Earth and receives satellite signals from the captured positioning information satellites;
a time correction information generating unit that generates time correction information based on the satellite signals received by the reception unit;
a display information correction unit that corrects displayed time information based on the time correction information;
a capturable satellite information storage unit that stores capturable satellite information relating to the positioning information satellites that can be captured in the region where the reception unit is located; and
a region information input unit for inputting the region information for the location of the reception unit;
wherein the reception unit captures the positioning information satellites based on the region information input through the region information input unit and the capturable satellite information.

2. The timekeeping device described in claim 1, wherein:
the region information input unit is rendered in the time display unit of the timekeeping device and enables selecting region names.

3. The timekeeping device described in claim 1 or claim 2, wherein:
the capturable satellite information relating to the positioning information satellites is stored correlated to time difference information for each region; and
the region information input unit is linked to operating a hand in the time display unit of the timekeeping device.

4. The timekeeping device described in any one of preceding claims 1-3, further comprising:
an altitude information acquisition unit that;
a probability of travel information storage unit that stores probability of travel information based on the altitude information; and
a travel determination unit that determines if the probability of travel is high based on the altitude information acquired by the altitude information acquisition unit and the probability of travel information;
wherein the positioning information satellites are captured based on the capturable satellite information and the region information input by the region information input unit when the travel determination unit determines the probability of travel is high.

5. A time correction method for a timekeeping device, the time correction method comprising steps of:
a reception unit that receives satellite signals from positioning information satellites orbiting the Earth capturing the positioning information satellites;
a time correction information generating unit generating time correction information based on the satellite signals received by the reception unit;
a display information correction unit correcting displayed time information based on the time correction information;
wherein the reception unit captures the positioning information satellites based on region information that is input through a region information input unit for inputting the region information for the location of the reception unit and capturable satellite information relating to the positioning information satellites that can be captured in the region where the reception unit is located.
